# EUROPEAN PATENT SPECIFICATION

(11) **EP 2 519 773 B1**
(45) Date of publication and mention of the grant of the patent: **27.04.2016**
(21) Application number: 10799005.3
(22) Date of filing: 16.12.2010
(51) Int. Cl.: F24C 7/08, A21B 1/40

(54) **AN OVEN**
BACKOFEN
FOUR DE CUISSON

(30) Priority: 30.12.2009 TR 200909989
(43) Date of publication of application: 07.11.2012
(73) Proprietor: Arçelik Anonim Sirketi, 34950 Istanbul (TR)
(72) Inventor: GURLEK, Mehmet Zihni, 34950 Istanbul (TR)
(86) International application number: PCT/EP2010/069916
(87) International publication number: WO 2011/080098

(56) References cited:
- EP-A2- 1 213 542
- WO-A2-2009/062917
- US-A- 4 682 013
- US-A- 4 803 344

## Description

The present invention relates to an oven wherein energy saving is provided in the cooking process.

In domestic type ovens, for example in ovens wherein electric heaters are used, the energy consumption value is aimed to be at low levels and precautions are taken towards providing energy savings. The insulation features of the oven door and walls are improved, elements that reflect or absorb the heat in the oven are used or different types of heaters are operated in the oven in order to keep the heat radiating from the heaters inside the oven and thus to provide saving of energy. Energy consumption in ovens varies according to the duration the heater remains turned on during the cooking time. The heaters are turned off for certain time periods during the cooking process or at the end of the cooking process thereby making use of the stored heat in the oven in order to use energy efficiently. In cooking programs aiming to save energy, if the operation durations of heaters are kept lower than required, the desired cooking quality cannot be provided and the cooking time is prolonged.

In the state of the art Patent Application No. WO2009062917, an oven is described comprising a control unit that regulates the cooking parameters such as temperature and duration so that energy savings is maintained at different temperature values defined by the user according to the type of food to be cooked.

The aim of the present invention is the realization of an oven wherein energy savings is provided during cooking.

In the oven realized in order to attain the aim of the present invention, explicated in the first claim and the respective claims thereof, at least a three phase cooking process is implemented by the control unit from the start to the end of the cooking according to a temperature defined by the user at the start of the cooking process. The first phase is realized at the first temperature defined by the user at the start of cooking, the second phase at a second temperature calculated by the control unit with respect to the first temperature and which is lower than the first temperature, the third phase at a third temperature calculated by the control unit with respect to the first temperature and which is higher than the first and second temperatures. Energy savings is provided in the second phase since less power is transferred to the heaters in the second phase and the cooking quality is improved in the third phase by increasing the temperature of the heaters again.

In the oven of the present invention, the first phase duration and the second phase duration are determined by the control unit depending on the first temperature. The control unit determines the maximum duration that the first phase can last at the start of cooking but controls the difference between the consecutive on-off cycle times of the heater as from the start of the first phase duration. When this difference becomes at least as much as the critical first phase duration predetermined by the producer, the control unit provides the first phase to be completed without waiting to reach the maximum duration. Consequently, energy saving is provided by keeping the first phase duration as short as possible.

The control unit determines the duration of the second phase at the start of cooking and controls the difference of consecutive on-off cycle times of the heater from the start of the second phase. The control unit provides the heater to operate in the off position until the end of the second phase when the difference between consecutive on-off cycle times of the heater becomes at least as much as the critical second phase duration predetermined by the producer. Energy saving is maintained by prolonging the time the heater stays in the off position.

The control unit completes the third phase duration when the number of on-off cycles of the heater in the third phase equals to the number of cycles predetermined by the producer and ends the cooking process.

In an embodiment of the present invention, the values of the second temperature and the third temperature are calculated by means of functions depending on the first temperature achieved through the experimental studies made by the producer.

In another embodiment of the present invention, the durations of the first phase and the second phase are calculated by means of functions depending on the first temperature achieved through the experimental studies made by the producer.

In another embodiment of the present invention, a switch is provided which delivers signal to the control unit when a door providing access to the cooking chamber is closed. The control unit starts the cooking algorithm that regulates the durations and temperatures of the cooking phases after receiving the signal from the switch. Consequently, the preliminary preparation time of the user that may pass prior to the first phase is not included in the cooking duration.

By means of the oven of the present invention, the duration of the first phase wherein the cooking process is performed at high temperature is decreased and the duration of the second phase wherein the cooking process is performed at low temperature is prolonged. Consequently, the energy consumption of the oven is decreased.

The oven realized in order to attain the aim of the present invention is illustrated in the attached figures, where:
Figure 1 - is the schematic view of an oven.
Figure 2 - is the graphic showing the change in the interior temperature of the oven with respect to time in an oven.

The elements illustrated in the figures are numbered as follows:
1. Oven
2. Cooking chamber
3. Heater
4. Control unit
5. Door
6. Switch
7. Thermostat

The oven (1) of the present invention comprises a cooking chamber (2) wherein the cooking process is performed, a heater (3) that provides foodstuffs placed into the cooking chamber (2) to be cooked and a thermostat (7) that controls the operation of the heater (3).

The oven (1) furthermore comprises a control unit (4) that provides the cooking process to be performed in at least three phases being the first phase, the second phase and the third phase from the start to the end of the cooking, in the first phase at a first temperature (T1) defined by the user at the start of cooking for a first phase duration (t1), in the second phase, at a second temperature (T2) lower than the temperature (T1) defined by the user for a second phase duration (t2) and in the third phase at a third temperature (T3) higher than the temperatures in the first or second phase for a third phase duration (t3).

The control unit (4) determines the decision for passing to the second phase from the first phase and/or to the third phase from the second phase according to the difference (Dt1, Dt2) between the consecutive on-off cycle times of the heater (3).

In the oven (1) of the present invention, the heater (3) operates in the on-off cycle within the interval set by the thermostat (7) through the first phase duration (t1) after reaching the first temperature (T1) in the first phase, operates in the on-off cycle within the interval set by the thermostat (7) through the second phase duration (t2) after reaching the second temperature (T2) in the second phase and operates in the on-off cycle within the interval set by the thermostat (7) through the third phase duration (t3) after reaching the third temperature (T3) in the third phase. Consequently, the temperature of the cooking chamber (2) in the first, second and third phases fluctuates between the first temperature (T1), the second temperature (T2) and the third temperature (T3) respectively.

After the cooking process is started by the user by defining the first temperature (T1), the heater (3) operates in the cooking chamber (2) without interruption at maximum power until the first temperature (T1) is reached and after reaching to around the first temperature (T1), operates in the on-off cycle within the interval set by the thermostat (7).

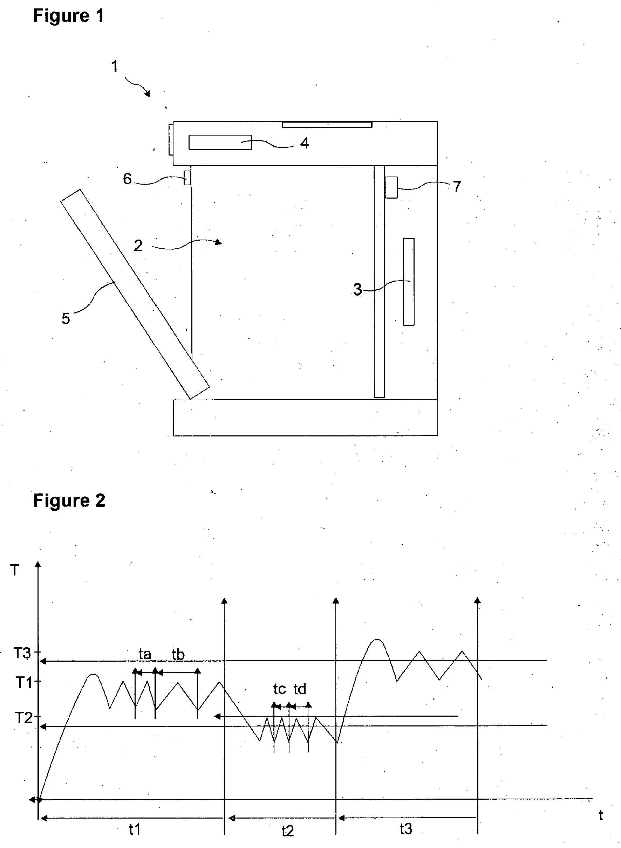

At the start of cooking the control unit (4) determines a maximum first phase duration (t1max) that the first phase can last depending on the first temperature (T1) and provides the first phase time (t1) to be completed without waiting to reach the maximum first phase duration (t1 max) and to pass from the first phase to the second phase when the difference (Dt1) between the consecutive on-off cycle times of the heater (3) becomes at least as much as the critical first phase time (tk1) predetermined by the producer. For example, in the first phase, the consecutive on-off cycle times of the heater (3) are denoted as ta and tb respectively and the difference (Dt1) between the consecutive on-off cycle times is calculated as tb-ta (Figure 2). The control unit (4) concludes that the interior temperature of the cooking chamber (2) has become stable and decides that it is not required to carry on the first phase cooking until the maximum first phase duration (t1 max) when the difference (Dt1) between the consecutive on-off cycle times of the heater (3) is equal to the first critical time (tk1) predetermined by the producer or greater than the said critical time (tk1). In this situation, the first phase duration (t1) is smaller than the maximum first phase duration (t1max). In other words, the control unit (4) provides the first phase duration (t1) to be decreased. Energy saving is provided by ending the first phase and starting the second phase wherein cooking is performed at the second temperature (T2) that is lower than the first temperature (T1).

Until reaching the maximum first phase duration (t1max) the control unit (4) continues the cooking until the first phase duration (t1) becomes equal to the maximum first phase duration (t1 max) when the difference (Dt1) between the consecutive on-off cycle times of the heater (3) is smaller than the critical time predetermined by the producer. In other words, the first phase duration (t1) becomes equal to the maximum first phase duration (t1 max).

At the start of cooking, the control unit (4) determines the second phase duration (t2) that the second phase will last depending on the first temperature (T1) and provides the heater (3) to operate in the off position until the end of the second phase duration (t2) and provides to pass from the second phase to the third phase at the end of the second phase duration (t2) when the difference (Dt2) between the consecutive on-off cycles of the heater (3) becomes at least as much as the second critical time (tk2) predetermined by the producer. For example, in the second phase, the consecutive on-off cycle times of the heater (3) are denoted as tc and td respectively and the difference (Dt2) between the consecutive on-off cycle times is calculated as td-tc (Figure 2). The control unit (4) concludes that the interior temperature of the cooking chamber (2) has not yet become stable at the second temperature (T2) and maintains the heater (3) to continue operating by the on-off cycle in the situation where the difference (Dt2) between the consecutive on-off cycles of the heater (3) is smaller than the second critical time (tk2) predetermined by the producer. Consequently, the total time the heater (3) stays in the off position during the second phase duration (t2) is prolonged by the control unit (4). Accordingly, the waste heat of the cooking chamber (2) is utilized for a longer time period and the energy consumption of the oven (1) is decreased.

The control unit (4) provides the cooking process to be completed by completing the third phase duration (t3) when the number (n) of on-off cycles of the heater (3) equals the number of cycles (ns) predetermined by the producer. The third phase cooking process is performed at a third temperature (T3) that is higher than the first or second phase temperatures. Consequently, the quality of cooking is improved.

In an embodiment of the present invention, the control unit (4) calculates the values of the second temperature (T2) and the third temperature (T3) by means of the functions that depend on the first temperature (T1) achieved through the experimental studies made by the producer. These functions are for example first degree linear functions.

In another embodiment of the present invention, the control unit (4) calculates the maximum first phase duration (t1max) and the second phase duration (t2) by means of the functions that depend the first temperature (T1) achieved through the experimental studies made by the producer.

In another embodiment of the present invention, the oven (1) comprises a door (5) that provides access to the cooking chamber (2) and a switch (6) disposed on the front face of the cooking chamber (2), that delivers signal to the control unit (4) when the door (5) is closed. The control unit (4) starts the first phase duration (t1) when the signal delivered from the switch (6) is received. Consequently, the preliminary preparation time that passes until the user operates the oven (1) and closes the door (5) after defining the first temperature (T1) is not included in the first phase duration (t1).

In the oven (1) of the present invention, energy saving is realized by providing the three phase cooking process to be performed at the first temperature (T1), defined by the user at the start and which is greater than the second temperature (T2) for a shorter time period and at the second temperature (T2) that is smaller than the first and third temperatures (T1, T3) for a longer time period.

It is to be understood that the present invention is not limited to the embodiments disclosed above and a person skilled in the art can easily introduce different embodiments. These should be considered within the scope of the protection postulated by the claims of the present invention.

## Claims

1. An oven (1) comprising a cooking chamber (2) wherein the cooking process is performed, a heater (3) that provides foodstuffs placed into the cooking chamber (2) to be cooked, a thermostat (7) that controls the operation of the heater (3) and a control unit (4) that provides the cooking process to be performed in at least three phases being the first phase, the second phase and the third phase from the start to end of the cooking, in the first phase at a first temperature (T1) defined by the user at the start of cooking process for a first phase duration (t1), in the second phase, at a second temperature (T2) lower than the temperature (T1) defined by the user for a second phase duration (t2) and in the third phase at a third temperature (T3) higher than the temperatures in the first or second phase for a third phase duration (t3),
**characterized by** the control unit (4) that determines the decision for passing to the second phase from the first phase and/or to the third phase from the second phase according to the difference (Dt1, Dt2) between the consecutive on-off cycle times of the heater (3), said control unit (4) providing to pass to the second phase from the first phase and/or to the third phase from the second phase when the difference (Dt1, Dt2) between the consecutive on-off cycle times of the heater (3) becomes at least as much as a critical time (tk1, tk2) predetermined by the producer.

2. An oven (1) as in Claim 1, **characterized by** the control unit (4) that determines the maximum first phase duration (t1max) that the first phase lasts depending on the first temperature (T1) at the start of cooking and when the difference (Dt1) between the consecutive on-off cycle times of the heater (3) becomes at least as much as the first critical time (tk1) predetermined by the producer, that provides the first phase duration (t1) to be completed without waiting to reach the maximum first phase duration (t1max) and to pass to the second phase from the first phase.

3. An oven (1) as in Claim 1 or 2, **characterized by** the control unit (4) that determines the second phase duration (t2) that the second phase lasts depending on the first temperature (T1) at the start of cooking and provides the heater (3) to operate in the off position until the end of the second phase duration (t2) and pass to the third phase at the end of the second phase duration (t2) when the difference (Dt2) between the consecutive on-off cycles of the heater (3) becomes at least as much as the second critical time (tk2) predetermined by the producer.

4. An oven (1) as in any one of the above Claims, **characterized by** the control unit (4) that decreases the first phase duration (t1).

5. An oven (1) as in any one of the above Claims, **characterized by** the control unit (4) that prolongs the total time the heater (3) stays in the off position during the second phase duration (t2).

6. An oven (1) as in any one of the above Claims, **characterized by** the control unit (4) that calculates the second temperature (T2) and the third temperature (T3) values by means of the functions depending on the first temperature (T1) achieved through the experimental studies made by the producer.

7. An oven (1) as in any one of the above Claims, **characterized by** the control unit (4) that calculates the maximum first phase duration (t1max) and the second phase duration (t2) by means of the functions depending on the first temperature (T1) achieved through the experimental studies made by the producer.

8. An oven (1) as in any one of the above Claims, comprising a door (5) that provides access to the cooking chamber (2), a switch (6) disposed on the front face of the cooking chamber (2), that delivers signal to the control unit (4) when the door (5) is closed and **characterized by** the control unit (4) that starts the first phase duration (t1) when the signal delivered from the switch (6) is received.

## Patentansprüche

1. Ofen (1), umfassend eine Garungskammer (2), in der der Gamorgang durchgeführt wird, eine Heizeinrichtung (3), die dafür sorgt, dass Lebensmittel, die in die Garungskammer (2) gegeben werden, gegart werden, ein Thermostat (7), das den Betrieb der Heizeinrichtung (3) steuert, und eine Steuereinheit (4), die dafür sorgt, dass der Garvorgang in wenigstens drei Phasen durchgeführt wird, nämlich der ersten Phase, der zweiten Phase und der dritten Phase vom Beginn bis zum Ende des Garens, in der ersten Phase bei einer ersten Temperatur (T1), die durch den Benutzer zu Beginn des Garvorgangs für eine erste Phasendauer (t1) definiert wird, in der zweiten Phase bei einer zweiten Temperatur (T2), die niedriger als die Temperatur (T1) ist und durch den Benutzer für eine zweite Phasendauer (t2) definiert wird, und in der dritten Phase bei einer dritten Temperatur (T3), die höher als die Temperaturen in der ersten oder zweiten Phase ist, für eine dritte Phasendauer (t3),
**dadurch gekennzeichnet, dass** die Steuereinheit (4) die Entscheidung für den Übergang zur zweiten Phase von der ersten Phase und/oder zur dritten Phase von der zweiten Phase gemäß der Differenz (Dt1, Dt2) zwischen den aufeinanderfolgenden Ein-Aus-Zykluszeiten der Heizeinrichtung (3) trifft, wobei die Steuereinheit (4) den Übergang zur zweiten Phase von der ersten Phase und/oder zur dritten Phase von der zweiten Phase ermöglicht, wenn die Differenz (Dt1, Dt2) zwischen den aufeinanderfolgenden Ein-Aus-Zykluszeiten der Heizeinrichtung (3) wenigstens eine kritische Zeit (tk1, tk2) erreicht, die vom Hersteller vorgegeben wird.

2. Ofen (1) nach Anspruch 1, **dadurch gekennzeichnet, dass** die Steuereinheit (4) die maximale erste Phasendauer (tlmax), für die die erste Phase andauert, abhängig von der ersten Temperatur (T1) zu Beginn des Garens bestimmt, und wenn die Differenz (Dt1) zwischen den aufeinanderfolgenden Ein-Aus-Zykluszeiten der Heizeinrichtung (3) wenigstens die vom Hersteller vorgegebene erste Zeit erreicht, ermöglicht, dass die erste Phasendauer (t1) abgeschlossen wird, ohne darauf zu warten, dass die maximale erste Phasendauer (tlmax) verstreicht, und der Übergang von der ersten Phase zur zweiten Phase erfolgt.

3. Ofen (1) nach Anspruch 1 oder 2, **dadurch gekennzeichnet, dass** die Steuereinheit (4) die zweite Phasendauer (t2), für die die zweite Phase andauert, abhängig von der ersten Temperatur (T1) zu Beginn des Garens bestimmt und dafür sorgt, dass die Heizeinrichtung (3) bis zum Ende der zweiten Phasendauer (t2) in der Aus-Stellung arbeitet und der Übergang zur dritten Phase am Ende der zweiten Phasendauer (t2) erfolgt, wenn die Differenz (Dt2) zwischen den aufeinanderfolgenden Ein-Aus-Zykluszeiten der Heizeinrichtung (3) wenigstens die vom Hersteller vorgegebene zweite kritische Zeit (tk2) erreicht.

4. Ofen (1) nach einem der vorangehenden Ansprüche, **dadurch gekennzeichnet, dass** die Steuereinheit (4) die erste Phasendauer (t1) verringert.

5. Ofen (1) nach einem der vorangehenden Ansprüche, **dadurch gekennzeichnet, dass** die Steuereinheit (4) die Gesamtzeit verlängert, für die die Heizeinrichtung (3) während der zweiten Phasendauer (t2) in der Aus-Stellung bleibt.

6. Ofen (1) nach einem der vorangehenden Ansprüche, **dadurch gekennzeichnet, dass** die Steuereinheit (4) die Werte der zweiten Temperatur (T2) und der dritten Temperatur (T3) mithilfe der Funktionen in Abhängigkeit von der ersten Temperatur (T1) berechnet, die durch experimentelle Versuche des Herstellers erlangt werden.

7. Ofen (1) nach einem der vorangehenden Ansprüche, **dadurch gekennzeichnet, dass** die Steuereinheit (4) die maximale erste Phasendauer (t1max) und die zweite Phasendauer (t2) mithilfe der Funktionen in Abhängigkeit von der ersten Temperatur (T1) berechnet, die durch experimentelle Versuche des Herstellers erlangt werden.

8. Ofen (1) nach einem der vorangehenden Ansprüche, umfassend eine Tür (5), die Zugang zur Garungskammer (2) bietet, einen Schalter (6), der an der Stirnfläche der Garungskammer (2) angeordnet ist und ein Signal an die Steuereinheit (4) leitet, wenn die Tür (5) geschlossen wird, und **dadurch gekennzeichnet, dass** die Steuereinheit (4) die erste Phasendauer (t1) startet, wenn das Signal von dem Schalter (6) empfangen wird.

## Revendications

1. Un four (1) comprenant une chambre de cuisson (2) dans laquelle le processus de cuisson est effectué ; un dispositif de chauffage (3) qui permet la cuisson des aliments placés dans la chambre de cuisson (2) ; un thermostat (7) qui commande le fonctionnement du dispositif de chauffage (3), et une unité de commande (4) qui effectue le processus de cuisson en au moins trois phases, à savoir la première phase, la deuxième phase et la troisième phase du début à la fin de la cuisson, dans la première phase à une première température (T1) définie par l'utilisateur au début de processus de cuisson pour une durée de la première phase (t1) et dans la deuxième phase à une deuxième température (T2) inférieure à la température (T1) définie par l'utilisateur pour une durée de la deuxième phase (t2) et dans la troisième phase à une troisième température (T3) supérieure à la température dans la première ou deuxième phase pour une durée de la troisième phase (t3), **caractérisé par** l'unité de commande (4) qui prend la décision pour passer de la première phase à la deuxième phase et/ou de la deuxième phase à la troisième phase en fonction de la différence (Dt1, Dt2) entre les durées de cycle marche-arrêt consécutives du dispositif de chauffage (3), ladite unité de commande (4) permettant le passage de la première phase à la deuxième phase et/ou de la deuxième phase à la troisième phase lorsque la différence (Dt1, Dt2) entre les durées de cycle marche-arrêt consécutives du dispositif de chauffage (3) devient au moins autant qu'une durée critique (tk1, tk2) prédéterminée par le fabricant.

2. Un four (1) selon la Revendication 1, **caractérisé par** l'unité de commande (4) qui détermine la durée de la première phase maximale (t1max) que la première phase dure en fonction de la première température (T1) au début de la cuisson et lorsque la différence (Dt1) entre les durées de cycle marche-arrêt consécutives du dispositif de chauffage (3) devient au moins autant que la première durée critique prédéterminée par le fabricant, qui permet l'achèvement de la durée de la première phase (t1) sans attendre d'atteindre la durée de la première phase maximale (t1max) et permet le passage de la première phase à la deuxième phase.

3. Un four (1) selon la Revendication 1 ou 2, **caractérisé par** l'unité de commande (4) qui détermine la durée de la deuxième phase (t2) que la deuxième phase dure en fonction de la première température (T1) au début de la cuisson et qui permet au dispositif de chauffage (3) de se fonctionner dans la position arrêt jusqu'à la fin de la durée de la deuxième phase (t2) et de passer à la troisième phase à la fin de la durée de la deuxième phase (t2) lorsque la différence (Dt2) entre les durées de cycle marche-arrêt consécutives du dispositif de chauffage (3) devient au moins autant que la deuxième durée critique (tk2) prédéterminée par le fabricant

4. Un four (1) selon l'une quelconque des revendications précédentes, **caractérisé par** l'unité de commande (4) qui diminue la durée de la première phase (t1).

5. Un four (1) selon l'une quelconque des revendications précédentes, **caractérisé par** l'unité de commande (4) qui prolonge la durée totale que le dispositif de chauffage (3) reste dans la position arrêt pendant la durée de la deuxième phase (t2).

6. Un four (1) selon l'une quelconque des revendications précédentes, **caractérisé par** l'unité de commande (4) qui calcule la deuxième température (T2) et la troisième température (T3) au moyen des fonctions en fonction de la première température (T1) obtenues par les études expérimentales effectuées par le fabricant.

7. Un four (1) selon l'une quelconque des revendications précédentes, **caractérisé par** l'unité de commande (4) qui calcule la durée de la première phase maximale (t1max) et la durée de la deuxième phase (t2) au moyen des fonctions en fonction de la première température (T1) obtenues par les études expérimentales effectuées par le fabricant.

8. Un four (1) selon l'une quelconque des revendications précédentes, comprenant une porte (5) qui permet l'accès dans la chambre de cuisson (2), un interrupteur (6) qui est disposé sur la face avant de la chambre de cuisson (2) et qui transmet des signaux à l'unité de commande (4) lorsque la porte (5) est fermée et **caractérisé par** l'unité de commande (4) qui démarre la durée de la première phase (t1) lorsque le signal transmis de l'interrupteur (6) est reçu.
